Europäisches Patentamt

European Patent Office

Office européen des brevets

(11) Veröffentlichungsnummer: **0 425 943 A2**

## (12) EUROPÄISCHE PATENTANMELDUNG

(21) Anmeldenummer: 90120143.4

(22) Anmeldetag: 20.10.90

(51) Int. Cl.5: **G01B 11/24**

(30) Priorität: 31.10.89 DE 3936224

(43) Veröffentlichungstag der Anmeldung:
08.05.91 Patentblatt 91/19

(84) Benannte Vertragsstaaten:
AT BE CH DE DK ES FR GB GR IT LI LU NL SE

(71) Anmelder: INOEX GmbH
Innovationen und Ausrüstungen für die
Extrusionstechnik Borweg 27
W-4970 Bad Oeynhausen 1(DE)

(72) Erfinder: Krüger, Ernst, Dr.
Ravensberger Freistuhl 11
W-4504 Georgsmarienhütte(DE)

(74) Vertreter: Cohausz & Florack Patentanwälte
Postfach 14 01 61 Schumannstrasse 97
W-4000 Düsseldorf 1(DE)

(54) Verfahren zum Erfassen der Geometrie des Querschnittes eines aus einem profilgebenden Werkstück austretenden, insbesondere extrudierten langgestreckten Werkstückes.

(57) Die Erfindung bezieht sich auf ein Verfahren zum Erfassen der Geometrie des Querschnittes eines aus einem profilgebenden Werkzeug austretenden, langgestreckten Werkstückes mit einer elektronischen Flächenkamera. Um das Auflösungsvermögen dieser Kamera, deren Bildpunkte (6) in einem regelmäßigen Raster angeordnet sind, zu erhöhen, werden nacheinander mehrere Bilder des Querschnittes aufgenommen, wobei während dieser Aufnahmen der Querschnitt in X- und Y-Richtung der Bildebene mit einer solchen Geschwindigkeit verlagert wird, daß der zwischen zwei aufeinanderfolgenden Aufnahmen zurückgelegte Weg in X- und Y-Richtung unter Berücksichtigung des Abbildungsmaßstabes einen Bruchteil der Abstände der benachbarten Bildpunkte (6) beträgt. Mit einem Rechner wird unter Berücksichtigung der Richtung (P) der Verlagerung des Querschnittes in der Bildebene aus der Anzahl der Aufnahmen von einem jeden Querschnittspunkt, die dieser benötigt, um von einem Bildpunkt oder einem zwischen zwei benachbarten Bildpunkten liegenden Punkt bis zum benachbarten Bildpunkt zu gelangen, die Lage dieses Querschnittpunktes bestimmt.

Fig. 2

# VERFAHREN ZUM ERFASSEN DER GEOMETRIE DES QUERSCHNITTES EINES AUS EINEM PROFILGEBEN-DEN WERKZEUG AUSTRETENDEN, INSBESONDERE EXTRUDIERTEN LANGGESTRECKTEN WERKSTÜK-KES

Die Erfindung bezieht sich auf ein Verfahren zum Erfassen der Geometrie des Querschnittes eines aus einem profilgebenden Werkzeug austretenden, insbesondere extrudierten langgestreckten Werkstückes mit einer elektronischen Flächenkamera, die das aufgenommene Bild als Information von einzelnen, in einem Raster angeordneten Bildpunkten liefert.

Bei bekannten Verfahren dieser Art wird von der Geometrie des Querschnittes mit der Flächenkamera oder einer Zeilenkamera ein einziges Bild aufgenommen. Die Genauigkeit des so aufgenommenen Bildes hängt vom Rastermaß der Bildpunkte (Pixel) der Kamera und dem Abstand zwischen Objekt und Kamera ab. Diese Genauigkeit reicht für manche Anwendungen nicht aus. So wird bei Extrudieranlagen für Profile eine Auflösung des von der Kamera gelieferten Bildes von unter 22 Micrometer verlangt. Kameras mit dieser Auflösung für entsprechende Flächen sind zur Zeit noch nicht erhältlich.

Der Erfindung liegt die Aufgabe zugrunde, ein Verfahren zum Erfassen der Geometrie eines Querschnittes eines aus einem profilgebenden Werkzeug austretenden langgestreckten Werkstückes zu entwickeln, das genauere Meßergebnisse liefert als sie von heute erhältlichen Flächenkameras geliefert werden können.

Diese Aufgabe wird erfindungsgemäß dadurch gelöst, daß nacheinander mehrere Bilder aufgenommen werden und während dieser Aufnahmen der Querschnitt des Werkstückes in X- und Y-Richtung der Bildebene mit einer solchen Geschwindigkeit verlagert wird, daß der zwischen zwei aufeinanderfolgenden Aufnahmen zurückgelegte Weg in X- und Y-Richtung unter Berücksichtigung des Abbildungsmaßstabes einem Bruchteil der Abstände benachbarter Bildpunkte im Raster in X- und Y-Richtung entspricht, und daß mit einem Rechner unter Berücksichtigung der Richtung der Verlagerung des Querschnittes in der Bildebene aus der Anzahl der Aufnahmen von einem jeden Querschnittspunkt, die dieser benötigt, um von einem Bildpunkt oder einem zwischen zwei benachbarten Bildpunkten liegenden Punkt bis zum benachbarten Bildpunkt zu gelangen, die Lage dieses Querschnittspunktes bestimmt wird. Dabei läßt sich die Verlagerung des Querschnittes in X- und Y-Richtung auf einfache Art und Weise dadurch verwirklichen, daß die Kamera ortsfest mit axialem Abstand von dem Querschnitt und seitlich neben dem Weg des Querschnittes des vorbewegten Werkstückes angeordnet ist. Vorzugsweise sollte der zurückgelegte Weg in X- und Y-Richtung einem mehrfachen, ungeradzahligen Abstand der Bildpunkte entsprechen.

Bei dem erfindungsgemäßen Verfahren wird künstlich das Auflösungsvermögen der Kamera erhöht. Sofern zum Beispiel während der Verlagerung eines Querschnittspunktes von einem Bildpunkt zum benachbarten Bildpunkt maximal zwei Aufnahmen gemacht werden, ist das Auflösungsvermögen um den Faktor zwei erhöht. Da die Geschwindigkeit des Profils vorgegeben ist, hängt die Auflösung durch die berechneten Aufnahmefolgen beziehungsweise -geschwindigkeit und der räumlichen Lage der Kamera vom Querschnitt ab.

Nach einer Ausgestaltung der Erfindung wird die Geometrie des erfaßten Querschnittes mit einer Sollgeometrie verglichen und aus der Soll-Istwertabweichung wird ein Stellglied für das profilgebende Werkzeug beziehungsweise für andere das Profil beeinflußende Elemente einer Extrudieranlage abgeleitet.

Der mit der Kamera ermittelte relative Querschnitt läßt sich in an sich bekannter Weise in einen absoluten Querschnitt umrechnen, indem zum einen die Fördergeschwindigkeit des Werkstückes und zum anderen die eingesetzte Materialmenge berücksichtigt wird (DE 33 11 345 A1).

Im folgenden wird die Erfindung anhand einer zeichnung näher erläutert. Im einzelnen zeigen:

Fig. 1 eine Extrudieranlage mit einer Vorrichtung zum Erfassen des Querschnittes eines extrudierten Werkstückes **und**

Fig. 2 eine Bildebene einer Flächenkamera im Ausschnitt mit nacheinander aufgenommenen Bildern des Querschnittes des Profils gemäß Figur 1.

Von einer Extrudieranlage 1 mit einem profilgebenden Werkzeug, und zwar einer Extrudierdüse, wird ein Werkstück 2 erzeugt, das eine im Querschnitt quaderförmige Stange ist. Mit axialem Abstand vor der im Querschnitt zu erfassenden Stirnseite 3 des Werkstückes 2 und seitlich neben dem Weg des Werkstückes 2, dessen Mittelachse strichpunktiert angedeutet ist, ist eine elektronische Flächenkamera 4 mit eingebautem Rechner ortsfest positioniert. Das Objektiv 5 dieser Flächenkamera 4 ist auf die im Querschnitt aufzunehmende Stirnseite 3 des Werkstückes 2 gerichtet. Die Flächenkamera 4 ist eingerichtet, um in zeitlicher Folge eine Reihe von Aufnahmen des Querschnittes zu machen und diese Aufnahmen abzuspeichern. Die Bilder werden rechnerisch verknüpft und daraus ein Bild höherer Auflösung gewonnen, als dies mit der Flächenkamera 4 als Einzelaufnahme allein möglich ist.

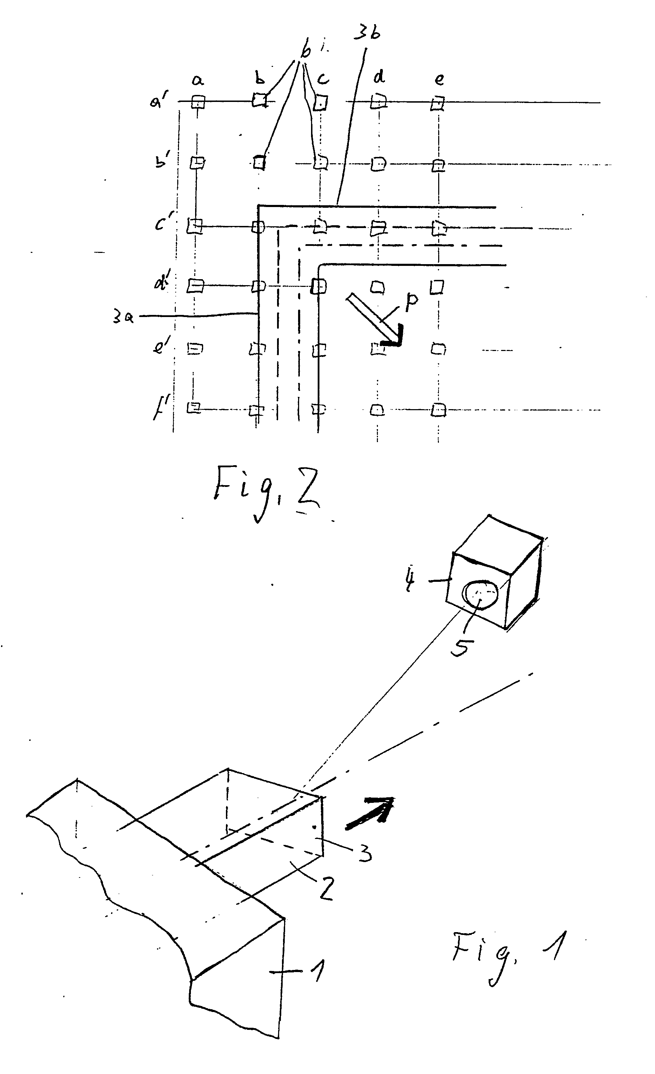

In Figur 2 ist eine Ecke der rechteckförmigen Stirnseite 3 des auszumessenden Profils vor Bildpunkten 6 der Flächenkamera 4 für verschiedene aufeinanderfolgende Aufnahmen dargestellt. Die Bildpunkte 6 sind in vertikalen Reihen a-e und horizontalen Reihen a'-f' im quadratischen Raster angeordnet. Bei der ersten Aufnahme liegt die vertikale Kante 3a auf den Bildpunkten 6 der vertikalen Reihe b. Die horizontale Kante 3b liegt dagegen zwischen den Bildpunkten 6 der horizontalen Reihen b' und c'. Das bedeutet, daß alle Bildpunkte innerhalb der Koordinatenpunkte bc',bd',be',bf' und bc',cc',dc',ec' aktiviert sind. Die Fördergeschwindigkeit des Werkstückes 2 und die Position der Flächenkamera 4 gegenüber der Stirnseite 3 ist so gewählt, daß die Kanten 3a,3b der Stirnseite 3 in Richtung des Pfeils P versetzt werden, wobei drei Aufnahmen notwendig sind, um von einer horizontalen oder vertikalen Reihe zur nächsten horizontalen oder vertikalen Reihe zu kommen. Bei der nächsten Aufnahme ist deshalb der Querschnitt 3 an die Position der gestrichelten Linien gerückt. In dieser Position sind die Bildpunkte der vertikalen Reihe b nicht länger aktiviert. Die Bildpunkte der horizontalen Reihe c' sind weiter aktiviert. Bei der nächsten Aufnahme ist die Stirnseite 3 in die Position der strichpunktierten Linie vorgerückt. In dieser Position sind nicht länger die Bildpunkte in der horizontalen Reihe c' aktiviert. Die Bildpunkte der vertikalen Reihe c' bleiben weiter aktiviert.

Aus dem Ergebnis der drei aufeinanderfolgenden Aufnahmen kann der Rechner eindeutig die Lage der vertikalen Kante 3a und horizontalen Kante 3b bestimmen, nämlich daß bei der ersten Aufnahme die vertikale Kante 3a sich exakt auf der vertikalen Reihe b und die horizontale Kante 3b um 1/3 Abstand der Bildpunkte 6 von der horizontalen Reihe c' sich befanden. Auf diese Art und Weise läßt sich also eine um den Faktor drei gesteigerte Auflösung der Flächenkamera erhalten.

Die auf diese Art und Weise ermittelte Geometrie des Querschnittes des Werkstückes 2 liegt zunächst nur in relativen Werten vor. Eine Umrechnung auf absolute Werte läßt sich mit Hilfe der sogenannten gravimetrischen Massendurchsatzerfassung ermitteln. Dieser durch Umrechnung erhaltene absolute Meßwert kann dann mit der Sollgeometrie des Querschnittes verglichen werden und daraus ein Stellsignal für Regelzwecke der Extrudieranlage abgeleitet werden.

**Ansprüche**

1. Verfahren zum Erfassen der Geometrie des Querschnittes eines aus einem profilgebenden Werkzeug austretenden, insbesondere extrudierten, langgestreckten Werkstückes (2) mit einer elektronischen Flächenkamera (4), die das aufgenommene Bild als Information von einzelnen in einem Raster angeordneten Bildpunkten (6) liefert, **dadurch gekennzeichnet,** daß nacheinander mehrere Bilder aufgenommen werden und während dieser Aufnahmen der Querschnitt in X- und Y-Richtung der Bildebene mit einer solchen Geschwindigkeit verlagert wird, daß der zwischen zwei aufeinanderfolgenden Aufnahmen zurückgelegte Weg in X- und Y-Richtung unter Berücksichtigung des Abbildungsmaßstabes einem Bruchteil der Abstände benachbarter Bildpunkte im Raster entspricht, und daß mit einem Rechner unter Berücksichtigung der Richtung (P) der Verlagerung des Querschnittes in der Bildebene aus der Anzahl der Aufnahmen von einem jeden Querschnittpunkt, die dieser benötigt, um von einem Bildpunkt oder einem zwischen zwei benachbarten Bildpunkten liegenden Punkt bis zum benachbarten Bildpunkt zu gelangen, die Lage dieses Querschnittpunktes bestimmt wird.

2. Verfahren nach Anspruch 1, **dadurch gekennzeichnet,** daß die Flächenkamera (4) mit axialem Abstand von dem Querschnitt und seitlich neben dem Weg des Querschnittes stationär angeordnet ist.

3. Verfahren nach Anspruch 1 oder 2, **dadurch gekennzeichnet,** daß die Geometrie des erfaßten Querschnittes mit einer Sollgeometrie verglichen wird und aus der Soll-Istwertabweichung ein Stellsignal für das profilgebende Werkzeug beziehungsweise andere das Profil beeinflußende Elemente dar Extrudieranlage abgeleitet wird.

4. Verfahren nach einem der Ansprüche 1 bis 3, **dadurch gekennzeichnet,** daß der zurückgelegte Weg in X- und Y-Richtung einem mehrfachen, ungeradzahligen Abstand der Pixel entspricht.

Fig. 2

Fig. 1